# EUROPEAN PATENT APPLICATION

(11) **EP 1 782 924 A1**
(43) Date of publication of application: **09.05.2007**
(21) Application number: 06255654.3
(22) Date of filing: 02.11.2006
(51) Int. Cl.: B25B 23/00

(54) **Depth adjustment apparatus for power tool**

(30) Priority: 03.11.2005 GB 0522413
(71) Applicant: GMCA PTY Ltd, Victoria 3045 (AU)
(72) Inventor: Nicholson, Marcus, Pocklington, York YO42 2QN (GB)
(74) Representative: Wood, Graham

(57) **Abstract**

The invention relates to a power tool (10) such as a drill which has spindle (14) for imparting drive into a component such as a screw (22), bolt or nail. Depth adjustment apparatus (2) is provided to be used in conjunction with the power tool to allow the depth to which the component (22) can be driven into an article can be controlled by selecting the position of the parts of the depth adjusting apparatus. In accordance with the invention the apparatus is effectively fitted in position on the power tool with a reduced risk of the apparatus parts seizing up in use.

## Description

The invention to which this application relates is to depth adjustment apparatus for use in conjunction with a power tool and in particular, a power tool with a function which, when it contacts with a nail or screw allows the same to be driven into an article via the power tool.

The provision of powered screwdrivers or drills with screwdriver attachments is well known and the power tool is particularly attractive to users who may be required to screw a number of screws into articles as part of their normal work tasks or as part of a do it your self project.

For certain tasks, particularly larger scale tasks, there may be a need to drive a number of the same type of screw into one or more articles and to screw the same in to the same depth, each time. One choice is for the user to simply operate the power tool for the same time for each screw and for the user to use their knowledge and experience to determine when each screw has been driven into the appropriate depth. However, the repeated driving of a plurality of screws into the same depth into an article can be monotonous to the user and furthermore, can be susceptible to error such that, for example, if one of the screws is not driven into the correct depth, such as being driven into a greater depth than required, damage or malfunction of the article, or articles joined together, can be incurred.

In order to avoid this problem, it is known to be able to mount on the driving head of the power tool, a depth adjustment apparatus. There are several known forms of depth adjustment apparatus which operate in a similar manner to offset the head of the drive spindle of the power tool which contacts with the head of the screw, a desired distance from the free end of the depth adjustment apparatus. The free end of the depth adjustment apparatus contacts the surface of the article into which the screw is to be driven and therefore prevents the power tool body and hence spindle from advancing further towards the article and hence prevents the screw from being further driven into the article as contact between the spindle and the screw head is lost. The distance between the free end of the apparatus and the head of the driving spindle, can be adjusted by the user by manipulation of the depth adjustment means.

A common problem experienced with the known depth adjustment apparatus is the problem of connecting the same onto the power tool body. Several different forms have been commercially used but, in practice, there is still a tendency for the apparatus to be inadvertently removable from the tool body or for the apparatus to be very difficult to use.

Another problem which is experienced is that the adjustment of the apparatus by user manipulation, can be difficult to achieve and stiffness between parts which may be required to be moved, means that no adjustment, or no fine adjustment, is possible or easily achievable.

The aim of the present invention is to provide an improved depth adjustment apparatus assembly which allows the same to be securely fitted onto the power tool, but still be removable therefrom, and provide the components of the apparatus in a manner which allows improved ease of user manipulation.

In the first aspect of the invention, there is provided depth adjustment apparatus for use in conjunction with a power tool, said apparatus comprising a mounting collar to allow the apparatus to be selectively mounted on the body of said power tool, with a drive spindle of said power tool having a drive head at its free end passing along at least part of an axial channel formed in said depth adjustment apparatus, an adjusting collar mounted on the mounting collar, and/or power tool at a first end, and a depth adjuster located at a second end of the adjusting collar, said depth adjuster mounted with the adjusting collar via respective threaded portions and said adjusting collar and depth adjuster provided such that rotation of the adjusting collar is translated into linear movement of the depth adjuster in the direction of the longitudinal axis of the spindle, so as to allow user variance of the distance between the free end of the depth adjuster and the head of the spindle.

Typically the drive head of the spindle is a portion which has one or more formations therein to allow engagement with the head of a screw, bolt or nail which is driven into an article, by rotation and/or a hammer action of said spindle driven via a motor located in the power tool. In one embodiment the spindle or part of the same, can be changed to allow the formations on the head to be changed to suit the screw, bolt, or nail size or type which is to be driven.

Typically, the adjustment of the position of the depth adjuster free end with respect to the distance from the spindle head, alters the distance between a screw head when in contact with the spindle head and the free end of the depth adjuster thereby altering the depth into which the screw can be driven into an article against which the free end of the depth adjuster is placed.

In one embodiment, the threaded portion of the depth adjuster sits within the second end of the adjusting collar.

In one embodiment, the depth adjuster is engaged with the power tool such that only linear movement of the depth adjuster with respect to the apparatus is possible thereby preventing the depth adjuster from rotating and therefore ensuring that linear movement of the depth adjuster occurs upon the rotation of the adjusting collar along the threaded portions formed between the depth adjuster and the adjustable collar.

In one embodiment one or both ends of the thread on the depth adjuster and/or adjusting collar are terminated prior to the maximum adjusting length being reached at one or both extremes of movement. Once the thread ends has been reached the adjustable collar can still be rotated but linear movement of the depth adjuster cannot be achieved. This prevents the linear movement at the extremes from continuing to an extent which conventionally is found to cause the components of the apparatus to seize up with each other and/or the power tool and hence make it difficult for the user to subsequently release the components for further adjustment to be made.

In one embodiment, the adjusting collar is engaged with the mounting collar and/or power tool body via at least one, but typically a plurality, of protrusions received in respective slots on the interior of said mounting collar and/or power tool body.

In one embodiment, the adjusting collar is mounted on the mounting collar as a result of relative axial and rotational movement between the adjusting and mounting collars.

In one embodiment, a tab and slot arrangement are provided so as to act as a bayonet fitting for the adjusting collar on the mounting collar.

Typically, once the adjusting collar is mounted with respect to the mounting collar, the same can be freely rotated with respect to the mounting collar and power tool body, with the tabs located in an annular groove formed around the power tool drive spindle.

In one embodiment, the mounting collar is a ring mounted at the drive end of the power tool via a snap fit engagement means such that the mounting collar is axially moved onto the end of the power tool to be engaged with the drive spindle passing through the same.

In a preferred embodiment a first step is provided to allow one or more slots on the power tool body to be aligned with corresponding slots in the mounting collar and in this position tabs provided on the adjusting collar can be moved along the slots to engage the adjusting collar on the mounting collar. The mounting collar can then be rotated to a locking position in which the tabs on the adjusting collar can be rotated but are trapped between the mounting collar and tool body.

There is therefore provided in accordance with the invention, a power tool depth adjustment apparatus which uses a minimum of parts, requires minimum adaptation of the existing power tool and still allows accurate and repeatable depth adjustment to the user thereby ensuring that the same can be repeatedly used and that relatively fine adjustment of the depth, which is what is required in practice, can be achieved.

In one embodiment there are provided a plurality of gradations which allow the relative depth adjustment at any instant between the adjustable collar and the depth adjuster to be visually identified.

In a further aspect of the invention there is provided a power tool with a working drive end having a rotatable and/or linearly movable drive spindle for the provision of a driving force to a component with which the same contacts to drive the component into an article, said spindle selectively used in conjunction with depth adjustment apparatus, said apparatus including a depth adjuster linearly movable with respect to an adjusting collar which is rotatably adjustable with respect to a mounting collar on the power tool wherein said adjusting collar is selectively positionable on the mounting collar via at least one tab mounted on the adjusting collar which passes along a slot formed in the mounting collar and a slot formed in the power tool when said mounting collar and power tool are moved to align the respective slots.

Typically, when the mounting collar and power tool are not aligned and the adjusting collar is fitted in position the adjusting collar is free to rotate around the mounting collar but cannot be axially moved with respect to the mounting collar or power tool and thereby causes linear movement of the depth adjuster connected thereto and with respect to which the adjusting collar is rotated. Typically the depth adjuster is restrained so as to only be movable linearly in a direction parallel with the longitudinal axis of the drive spindle of the power tool.

In a yet further aspect of the invention there is provided a method of fitting a power tool having a working drive end having a rotatable and/or linearly movable drive spindle for the provision of a driving force to a component with which the same contacts to drive the component into an article, with depth adjustment apparatus, said apparatus including a depth adjuster linearly movable with respect to an adjusting collar which is rotatably adjustable with respect to a mounting collar provided on the power tool wherein said power tool includes an annular groove, said method comprising the steps of snap fitting the mounting collar onto the power tool drive end to enclose the groove, positioning the adjusting collar on the mounting collar via at least one or more tabs mounted on the adjusting collar which passes along respective slots formed in the mounting collar and in the power tool when said mounting collar and power tool are moved to align the slots, moving the mounting collar to misalign the slots and trap the adjusting collar in position, with said tabs rotatable around the said groove.

In an alternative embodiment the tabs are provided on the mounting collar and the slots are provided on the adjusting collar and the power tool.

In one embodiment the depth adjuster is threadably engaged with the adjusting collar and is constrained so as to be only linearly movable such that rotation of the adjusting collar causes linear movement of the depth adjuster.

In whichever embodiment the power tool is typically a powered screwdriver or drill and may in a further embodiment be adapted to be used on a powered nail driver and said components which are driven by the tool can be any of a screw, nail or bolt.

Specific embodiments of the invention are now described with reference to the accompanying drawings wherein;
Figure 1 illustrates an exploded view of components of the depth adjustment apparatus in accordance with one embodiment of the invention;
Figure 2 illustrates a further exploded view of the apparatus in accordance with one embodiment of the invention;
Figure 3 illustrates the apparatus of figure 2 assembled; and
Figure 4 illustrates in detail the fixing arrangement between the power tool, mounting collar and adjusting collar.

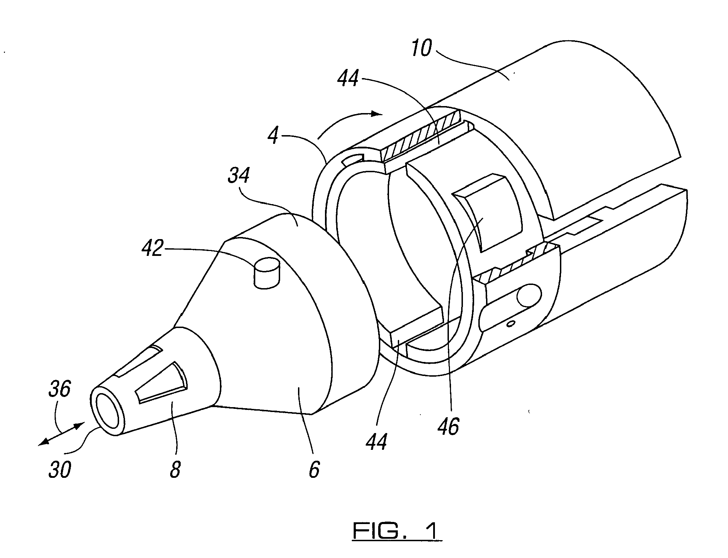

Referring now to the Figures 1-3 there is shown a power tool 10 in the form of a powered screw driver or drill for use in imparting a drive, typically rotational and/or hammer action onto a component such as a screw, bolt or nail. Also shown is a depth adjustment apparatus in accordance with the invention, said apparatus, 2, comprising a mounting collar 4 (shown partly broken away in Figure 1), adjusting collar 6 and depth adjuster 8.

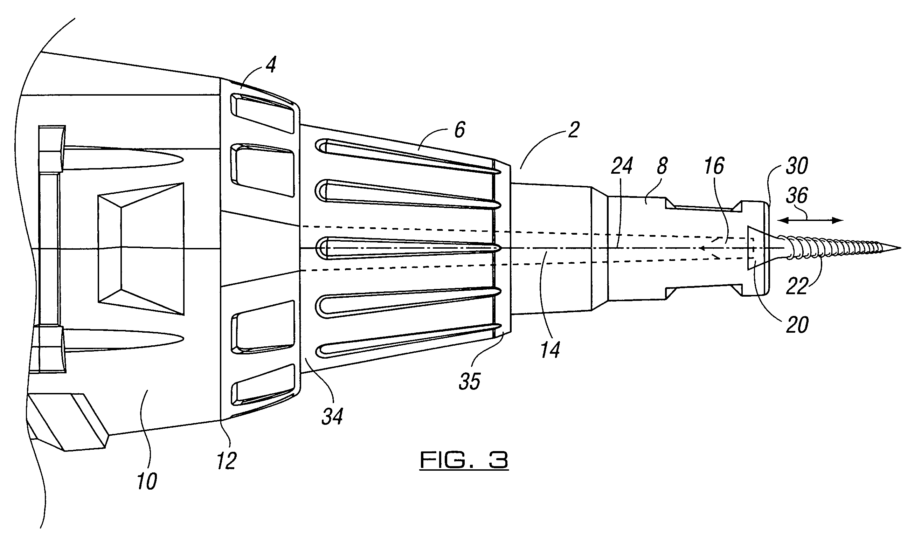

The power tool has a drive end 12, having a spindle 14, shown in broken lines in figure 3 and the spindle has a head 16 to allow connection with the head 20 of a component in this case in the form of screw 22, which is to be driven into an article (not shown) by rotation of the spindle 14 via a motor of the power tool 10. The rotation of the spindle and operation of the same can be in any one of a number of conventional ways and therefore is not discussed here. The depth adjustment apparatus 2 is provided with an internal channel which passes through the length of the same and which is coaxial with the spindle longitudinal axis 24 so that the spindle sits within and extends along at least part of the channel.

In order to allow the alteration of the depth to which the screw is driven into an article, the free end 30 of the depth adjuster, needs to be linearly adjustable with respect to the position of the head 16 of the spindle. As a result, the depth adjuster is required to be axially movable as indicated by the arrow 36.

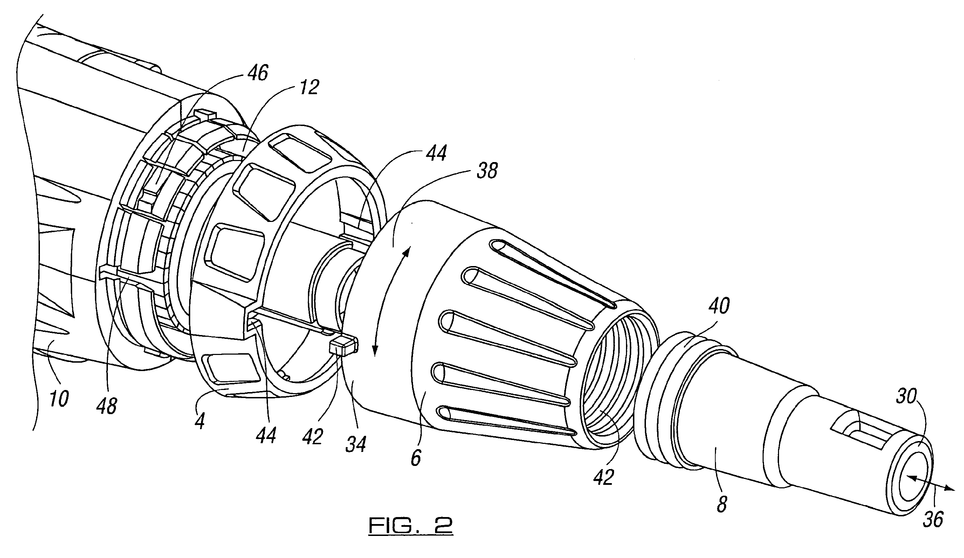

In order to achieve this, the depth adjuster 8 is provided with a threaded portion 40 which engages with a threaded portion 42 on the adjusting collar. However, the adjusting collar 6 is only rotatably movable as indicated by arrow 38 in figure 2 and is restrained from being axially moveable due to its engagement with the mounting collar 4. This therefore means that as the depth adjuster 8 is only axially movable as it is prevented from being rotatably movable via engagement typically with the power tool, rotation of the adjusting collar is translated into linear movement of the depth adjuster via the threaded portions 40, 42 and hence the adjustment of the distance between the free end 30 of the depth adjuster 8 and the head 16 of the spindle 14 can be achieved.

Typically one or both ends of the threaded portions of the depth adjuster and/or adjusting collar is formed so as to terminate prior to the extremities of the inner and outer positions of the depth adjuster position with respect to the apparatus being reached. As linear movement of the depth adjuster is only achieved when the threaded portions of the depth adjuster and adjusting collar are in connection so the rotation of the adjusting collar beyond the ends of the threaded portions does not cause linear movement of the depth adjuster and so the possibility of the depth adjuster and /or adjusting collar sizing up or jamming with the power tool or mounting collar is prevented and therefore the problem of the apparatus being difficult to release for further adjustment is overcome.

The adjusting collar 6, at the first end 34 opposing the second end 35 with the threaded portion 42, is mounted on the mounting collar 4 via a bayonet fitting arrangement which is achieved via tabs 42 and matching slots 44. It should be appreciated that although in this embodiment the tabs are shown on the adjusting collar 6 and the slots on the mounting collar 4, the reverse arrangement may also be utilised.

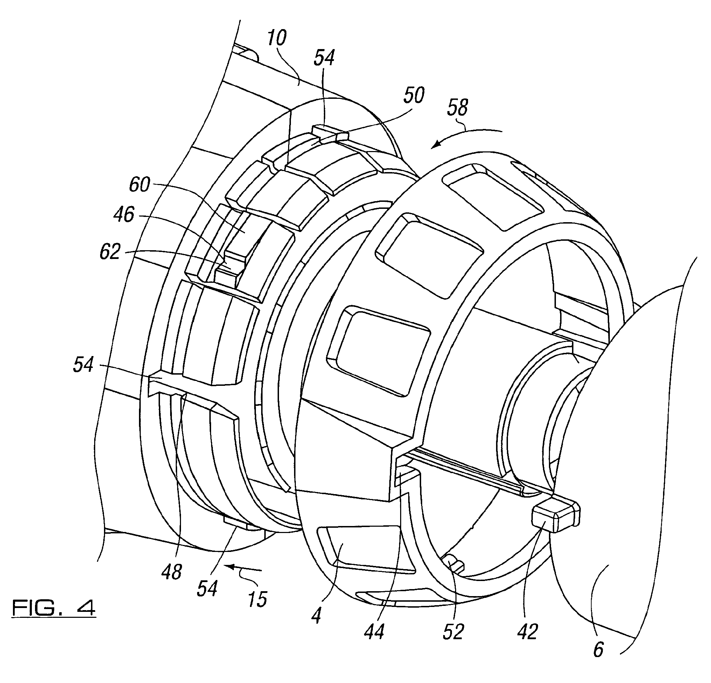

Figure 4 illustrates in detail, the fixing arrangement between the power tool body 10, mounting collar 4 and adjusting collar 6, part of which is shown. To assemble these parts together, the mounting collar 4 is axially moved as indicated by arrow 15 onto the end of the power tool 10. The power tool 10 has a series of formations thereon, the purpose of which will be explained.

The power tool has a groove 50 formed there around for the location therein of first and second snap fit features 52, one of which is shown, positioned internally of the mounting collar such that both of these features 52, when the mounting collar overlies the groove 50, snap into and engage with the groove 50 to thereby locate the mounting collar in axial position with regard to the power tool 10. First and second blocks, 54 are provided at spaced locations along the groove as shown. These blocks 54 are located with respect to the features 52 such that when the features 52 abut the blocks 54, the slots 48 on the body of the power tool, and slots 44 on the mounting collar, are in line so as to form a continuous slot.

In this position, the tabs 42 of the adjusting collar 6, can be slid along the slots in the direction of arrow 15 such that the tabs move along the slot 44 and 48 to lie in an annular groove 56 within the power tool body. Once the tabs 42 are inserted along the slots 44, 48 and lie in the groove 50, the mounting collar 4 is then rotated, as indicated by arrow 58, typically 90°, until engagement means on the interior of the collar, not shown, engage with engagement means 46 on the power tool body. The engagement means on the mounting collar move along the first ramp section 60 until they reach the indent section 62 into which the engagement means resiliently fit. When in this position, the mounting collar is thereafter prevented from easily being rotated with respect to the power tool body and, furthermore, it means that the slots 44 on the mounting collar and 48 of the power tool, are no longer aligned. This in turn means that the tabs 42 cannot be released from the mounting collar and so the adjusting collar 6 is effectively axially located and trapped in position on the power tool via the mounting collar. However, the adjusting collar can still be rotated but is restrained from linear movement as the tabs 42 are within the groove 50 which allows 360° rotation of the adjusting collar with respect to the power tool and mounting collar. In this way, so the rotation of the adjusting collar can be transferred into the linear movement of the depth adjuster via the threaded engagement between the adjusting collar and the depth adjuster at the opposing end of the adjusting collar from the tabs 42.

In order to release the depth adjuster assembly from the power tool, the mounting collar is rotated in the opposite direction to arrow 58 and to do so, a force is required to release the engagement means on the interior of the mounting collar from the recess 62 of the engagement means 46. Once released, the mounting collar can be further rotated until the engagement means 52 abut with respective blocks 54 which means that the slots 44 and 48 will be in alignment. In this position, the tabs 42 on the adjusting collar can be rotated via the adjusting collar so that they also lie in line with the slots 44 and 48 and the tabs can then be slid outwardly away from the power tool to allow the adjusting collar and depth adjuster to be released from the power tool. Typically, the mounting collar itself will still be engaged on the power tool via the engagement means 52 located in the groove 50 and therefore the mounting collar can be permanently retained on the power tool.

A series of gradations (not shown) can be provided at the interface between the depth adjuster and the adjusting collar so as to allow the depth apposition at each instant to be gauged.

The apparatus can be relatively easily fitted onto and removed from the power tool, typically via a removal of the adjusting collar and depth adjuster from the mounting collar via the bayonet fitting.

## Claims

1. Depth adjustment apparatus for use in conjunction with a power tool, said apparatus comprising a mounting collar to allow the apparatus to be selectively mounted on the body of said power tool, with a drive spindle of said power tool having a drive head at its free end passing along at least part of an axial channel formed in said depth adjustment apparatus, an adjusting collar mounted on the mounting collar, and/or power tool at a first end, and a depth adjuster located at a second end of the adjusting collar, said depth adjuster mounted with the adjusting collar via respective threaded portions and said adjusting collar and depth adjuster provided such that rotation of the adjusting collar is translated into linear movement of the depth adjuster in the direction of the longitudinal axis of the spindle, so as to allow user variance of the distance between the free end of the depth adjuster and the head of the spindle.

2. Apparatus according to claim 1 wherein the adjustment of the position of the depth adjuster free end, with respect to the distance from the spindle head, alters the distance by which a component can be driven into an article against which the free end of the depth adjuster is placed.

3. Apparatus according to claim 1 wherein the threaded portion of the depth adjuster sits within the second end of the adjusting collar.

4. Apparatus according to claim 3 wherein one or both ends of the threaded portion of the depth adjuster and/or adjusting collar is formed so as to terminate prior to the extremities of the depth adjuster position being reached.

5. Apparatus according to claim 4 wherein linear movement of the depth adjuster is only achieved when the threaded portions of the depth adjuster and adjusting collars are in connection.

6. Apparatus according to claim 1 wherein the depth adjuster is prevented from rotating and thereby ensures that linear movement of the depth adjuster occurs upon rotation of the adjusting collar via the threaded portions.

7. Apparatus according to claim 1 wherein a series of gradations or markings are provided at the interface between the adjusting collar and depth adjuster.

8. Apparatus according to claim 1 wherein the adjusting collar is engaged with the mounting collar and/or power tool body via at least one protrusion received in a slot on the interior of the mounting collar and/or power tool body.

9. Apparatus according to claim 1 wherein the adjusting collar is mounted on the mounting collar as a result of relative axial and rotational movement between the adjusting and mounting collars.

10. Apparatus according to claim 8 wherein a tab and slot arrangement are provided so as to act as a bayonet fitting for the adjusting collar on the mounting collar.

11. Apparatus according to claim 1 wherein once the adjusting collar is mounted with respect of the mounting collar, the same can be freely rotated with respect to the mounting collar and power tool body.

12. Apparatus according to claim 11 wherein tabs are located in an annular groove passing around the power tool body.

13. Apparatus according to claim 1 wherein the mounting collar is mounted on an end of the power tool via a snap fit engagement means such that the mounting collar is axially moved onto the end of the power tool to be engaged.

14. Apparatus according to claim 1 wherein the apparatus is assembled on the power tool body by aligning one or more slots on the power tool with corresponding slots in the mounting collar and in this position, tabs of the adjusting collar can be moved along the aligned slots to engage the adjusting collar on the mounting collar by then rotating the mounting collar to misalign said slots.

15. Apparatus according to claim 14 wherein when the mounting collar is rotated to a locking position the adjusting collar can be rotated and the tabs of the adjusting collar are trapped between the mounting collar and tool body.

16. A power tool with a working drive end having a rotatable and/or linearly movable drive spindle for the provision of a driving force to a component with which the same contacts to drive the component into an article, said spindle selectively used in conjunction with depth adjustment apparatus, said apparatus including a depth adjuster linearly movable with respect to an adjusting collar which is rotatably adjustable with respect to a mounting collar on the power tool wherein said adjusting collar is selectively positionable on the mounting collar via at least one tab mounted on the adjusting collar which passes along a slot formed in the mounting collar and a slot formed in the power tool when said mounting collar and power tool are moved to align the respective slots.

17. A power tool according to claim 16 wherein when the mounting collar and power tool are not aligned and the adjusting collar is fitted in position the adjusting collar is free to rotate around the mounting collar but cannot be axially moved with respect to the mounting collar or power tool.

18. A power tool according to claim 17 wherein rotation of the adjusting collar causes linear movement of the depth adjuster connected thereto and with respect to which the adjusting collar is rotated.

19. A power tool according to claim 18 wherein the depth adjuster is restrained so as to only be movable linearly in a direction parallel with the longitudinal axis of the drive spindle of the power tool.

20. A power tool according to claim 17 wherein the head of the spindle is a portion which has one or more formations therein to allow engagement with the head of a screw which is driven into an article by rotation of said spindle via a motor located in the power tool.

21. A power tool according to claim 20 wherein the spindle or part of the same can be changed to allow the formations on the head to be changed to suit the screw type which is to be driven.

22. A method of fitting a power tool having a working drive end having a rotatable and/or linearly movable drive spindle for the provision of a driving force to a component with which the same contacts to drive the component into an article, with depth adjustment apparatus, said apparatus including a depth adjuster linearly movable with respect to an adjusting collar which is rotatably adjustable with respect to a mounting collar provided on the power tool wherein said power tool includes an annular groove, said method comprising the steps of snap fitting the mounting collar onto the power tool drive end to enclose the groove, positioning the adjusting collar on the mounting collar via at least one or more tabs mounted on the adjusting collar which passes along respective slots formed in the mounting collar and in the power tool when said mounting collar and power tool are moved to align the slots, moving the mounting collar to misalign the slots and trap the adjusting collar in position, with said tabs rotatable around the said groove.

23. A method according to claim 22 wherein the tabs are provided on the mounting collar and the slots are provided on the adjusting collar and the power tool.

24. A method according to claim 22 wherein a depth adjuster is threadably engaged with the adjusting collar and is constrained so as to be only linearly movable such that rotation of the adjusting collar causes linear movement of the depth adjuster.
